# EUROPÄISCHE PATENTSCHRIFT

(11) **EP 2 196 322 B1**
(45) Veröffentlichungstag und Bekanntmachung des Hinweises auf die Patenterteilung: **25.10.2017**
(21) Anmeldenummer: 09015216.6
(22) Anmeldetag: 08.12.2009
(51) Int. Cl.: C08J 7/04, B42D 25/00, B42D 25/29, B42D 25/355, B42D 25/364, B42D 25/45

(54) **Sicherheitselement**
Security element
Elément de sécurité

(30) Priorität: 11.12.2008 DE 102008061608
(43) Veröffentlichungstag der Anmeldung: 16.06.2010
(73) Patentinhaber: Giesecke+Devrient Currency Technology GmbH, 81677 München (DE)
(72) Erfinder: Hoffmüller, Winfried, Dr., 83646 Bad Tölz (DE); Hoffmann, Lars, Dr., 85354 Freising (DE)

(56) Entgegenhaltungen:
- WO-A1-2004/095090
- WO-A1-2005/105475
- DE-A1-102006 015 023

## Beschreibung

Die Erfindung betrifft ein Sicherheitselement zur Echtheitssicherung eines Wertgegenstands, wie eines Sicherheitspapiers, eines Wertdokuments oder eines Markenartikels, das einen Schichtaufbau mit mindestens einer Schicht auf der Basis eines flüssigkristallinen Materials und mindestens einer dieser Flüssigkristallschicht benachbarten Lackschicht aufweist. Die Erfindung betrifft außerdem ein Verfahren zur Herstellung des Sicherheitselements, einen Wertgegenstand mit dem erfindungsgemäßen Sicherheitselement, ein Transferband mit einer Vielzahl von als Transferelement ausgebildeten erfindungsgemäßen Sicherheitselementen sowie die Verwendung des erfindungsgemäßen Sicherheitselements zur Produktsicherung von Waren jeglicher Art.

Wertgegenstände, wie etwa Markenartikel oder Wertdokumente, werden zur Absicherung oft mit Sicherheitselementen ausgestattet, die eine Überprüfung der Echtheit des Wertgegenstands gestatten und die zugleich als Schutz vor unerlaubter Reproduktion dienen. Wertgegenstände im Sinne der vorliegenden Erfindung sind insbesondere Banknoten, Aktien, Ausweise, Kreditkarten, Anleihen, Urkunden, Gutscheine, Schecks, hochwertige Eintrittskarten, aber auch andere fälschungsgefährdete Papiere, wie Pässe und sonstige Ausweisdokumente, sowie Produktsicherungselemente, wie Etiketten, Siegel, Verpackungen und dergleichen. Der Begriff "Wertgegenstand" schließt im Folgenden alle derartigen Gegenstände, Dokumente und Produktsicherungsmittel ein.

Vielfach werden dabei die besonderen Eigenschaften von flüssigkristallinen Materialien ausgenutzt, und dabei vor allem der betrachtungswinkelabhängige Farbeindruck und die lichtpolarisierende Wirkung der Flüssigkristalle. Um die lichtpolarisierende Wirkung und den Farbkippeffekt der Flüssigkristalle gut beobachten zu können, ist es nach herrschender Meinung erforderlich, die Flüssigkristalle auszurichten und unkontrollierte Streueffekte zu vermeiden.

Es sind zahlreiche Verfahren zur Ausrichtung von Flüssigkristallen bekannt. Bekannt ist beispielsweise, die Flüssigkristalle auf spezielle Trägermaterialien aufzubringen, die aufgrund ihrer inneren Struktur eine Vorzugsrichtung aufweisen, die ausreicht, um das flüssigkristalline Material in der gewünschten Form auszurichten. Beispiele solcher zur Ausrichtung von flüssigkristallinem Material geeigneten Trägermaterialien sind Folien aus PET, PE, BOPP und OPP.

Alternativ werden spezielle Alignmentschichten zur Ausrichtung der Flüssigkristalle vorgesehen. Als Alignmentschichten kommen beispielsweise eine Schicht aus einem linearen Fotopolymer, eine fein strukturierte Schicht oder eine durch Ausübung von Scherkräften ausgerichtete Schicht infrage. Geeignete fein strukturierte Schichten können durch Prägen, Ätzen, Einritzen oder direkten Druck der Strukturen hergestellt werden. Auch das Fotoalignment von Flüssigkristallschichten ist bekannt. Dabei werden Alignmentschichten aus linearen Fotopolymeren eingesetzt, die durch Belichtung mit polarisiertem Licht oder unter definiertem Winkel strukturiert werden können.

Auch Flüssigkristallschichten selbst werden zum Alignment, d. h. zur Ausrichtung weiterer Flüssigkristallschichten verwendet. Aus der Druckschrift WO 2007/140887 ist bekannt, eine Flüssigkristall-Motivschicht aus bevorzugt nematischen Flüssigkristallen durch eine Flüssigkristall-Alignmentschicht auszurichten. Die Alignmentschicht besteht entweder aus cholesterischen Flüssigkristallen und weist Bereiche unterschiedlicher Schichtdicke auf, oder aus nematischen Flüssigkristallen in Kombination mit einem fotoisomerisierbaren Verdriller. In der Druckschrift EP 1894 736 ist offenbart, eine Flüssigkristallschicht durch bereichsweisen Kontakt mit einer darunterliegenden Flüssigkristallschicht bereichsweise unterschiedlich auszurichten. Die unterschiedliche Ausrichtung beruht auf einem Anlösen und dadurch bedingten Vermischen der Flüssigkristallschichten in den Kontaktbereichen.

Der physikalische Hintergrund für die bei Flüssigkristall-Sicherheitsmerkmalen beobachteten Effekte ist, dass in Dimensionen, die groß sind gegenüber der Wellenlänge des sichtbaren Lichts, eine einheitliche Ausrichtung der Flüssigkristalle vorgegeben wird. Bereiche einheitlicher Ausrichtung haben auch einheitliche Licht-Polarisationseigenschaften und zeigen einheitliche Farbkippeffekte.

Die Schaffung perfekter Ausrichtungsbedingungen für Flüssigkristalle ist meist einigermaßen unproblematisch, so lange nur eine einzige Flüssigkristallschicht auf einen einheitlichen Untergrund, beispielsweise eine gereckte PET-Folie, ohne weitere zusätzliche Beschichtungen, aufgebracht werden soll, jedenfalls sofern die Folie keine Qualitätsschwankungen aufweist. In Sicherheitselementen sind Flüssigkristallschichten aber in aller Regel Bestandteil eines vielschichtigen Aufbaus mit mehreren Funktionsschichten, und die Schaffung eines geeigneten Untergrunds für eine hinreichende Ausrichtung der Flüssigkristalle ist häufig nicht gewährleistet. Starke Qualitätsschwankungen des Untergrunds führen aber auch zu starken Qualitätsschwankungen der Flüssigkristallschicht, die für einen Betrachter sichtbar werden.

Außerdem muss in Sicherheitselementen die Flüssigkristallschicht typischerweise mit weiteren Schichten beschichtet werden, z. B. mit zusätzlichen Flüssigkristallschichten, Prägelackschichten, Farbschichten, Klebstoffschichten, etc. Dadurch kann die Flüssigkristallschicht in einer Weise beeinflusst werden, dass die Ausrichtung der Flüssigkristalle in beobachtbarer Weise gestört wird. Die Qualität des Sicherheitsmerkmals auf der Basis der Flüssigkristalle wird dadurch beeinträchtigt. Dies gilt insbesondere, wenn die Flüssigkristalle nicht vollständig ausgehärtet sind und wenn die weitere Schicht z.B. hochsiedende Lösungsmittel enthält, die im Trocknungsvorgang den Schichtaufbau nicht vollständig verlassen und in die Flüssigkristallschicht eindringen können.

Ein Sicherheitselement mit den Merkmalen des Oberbegriffs des Anspruchs 1 ist auch aus der Druckschrift WO 2004/095090 A1 bekannt. Aufgabe der vorliegenden Erfindung ist es daher, ein Sicherheitselement mit einem Sicherheitsmerkmal auf Flüssigkristall-Basis bereitzustellen, bei dem die Probleme des Stands der Technik vermieden werden.

Aufgabe der vorliegenden Erfindung ist es auch insbesondere, die Einschränkungen hinsichtlich der für Sicherheitsmerkmale auf Flüssigkristall-Basis zu verwendenden Untergründe zu verringern.

Aufgabe der vorliegenden Erfindung ist es allgemein, eine größere Designfreiheit hinsichtlich des Aufbaus von Sicherheitselementen mit Sicherheitsmerkmalen auf Flüssigkristall-Basis zu schaffen.

Die Aufgabe wird gelöst durch das Sicherheitselement mit den Merkmalen des Anspruchs 1. Ein Verfahren zur Herstellung des Sicherheitselements, ein Wertgegenstand und ein Transferband mit erfindungsgemäßen Sicherheitselementen sowie die Verwendung der Sicherheitselemente zur Produktsicherung sind Gegenstand der nebengeordneten Ansprüche. Spezielle Ausführungsformen der Erfindung sind Gegenstand der abhängigen Ansprüche.

Das erfindungsgemäße Sicherheitselement weist einen Schichtaufbau mit mindestens einer Schicht auf der Basis eines flüssigkristallinen Materials und mindestens einer Lackschicht, auf die die Flüssigkristallschicht aufgetragen ist, auf und ist dadurch gekennzeichnet, dass die Lackschicht, auf die die Flüssigkristallschicht aufgetragen ist, unstrukturiert ist und aus einem Lack besteht, der frei von Flüssigkristallen ist und gegenüber der Flüssigkristallschicht inert ist. "Unstrukturiert" im Sinne der vorliegenden Erfindung bedeutet, dass die Lackschicht keine Struktur aufweist, die dazu geeignet ist, eine einheitliche Ausrichtung eines darauf aufgebrachten flüssigkristallinen Materials gezielt zu fördern. "Inert" im Sinne der vorliegenden Erfindung bedeutet, dass die Lackschicht ohne unmittelbare Auswirkung auf die Flüssigkristallschicht ist, d. h. es findet beispielsweise kein gegenseitiges Anlösen mit der Folge einer Vermischung der Schichten statt, zumindest nicht in einem Umfang, der bei der Flüssigkristallschicht eine optische Wirkung hervorruft.

Überraschenderweise wurde gefunden, dass Sicherheitsmerkmale auf Flüssigkristallbasis nicht zwingend auf einen Untergrund aufgetragen werden müssen, der eine Ausrichtung der Flüssigkristalle zur Folge hat, zumindest keine Ausrichtung in makroskopischen Dimensionen. Als Untergrund kann vielmehr ein beliebiger Lack dienen, der gegenüber der Flüssigkristallschicht-Zusammensetzung inert ist.

Die Art des Lacks hängt daher ab von dem Material, mit dem er beschichtet werden soll. Es ist zu vermeiden, dass ein Anlösen der Flüssigkristall-Zusammensetzung durch den Lack oder umgekehrt, und damit unter Umständen ein Vermischen zwischen Lack und Flüssigkristall-Zusammensetzung stattfindet. Daher ist der Lack bevorzugt lösungsmittelfrei. Besonders bevorzugt sind Lacke, die durch UV-Strahlung oder durch Elektronenstrahlung (ES-Strahlung) härtbar sind. Insbesondere werden radikalisch oder kationisch härtende UV-Lacke, gegebenenfalls mit Fotoinitiatoren, verwendet. Es versteht sich, dass der Lack seinerseits frei von Flüssigkristallen ist. Lack und angrenzende Flüssigkristallschicht bzw. Flüssigkristallschichten müssen also aufeinander abgestimmt werden. Ein Lack, der eine Flüssigkristallschicht einer bestimmten Zusammensetzung anlöst und daher für sie ungeeignet ist, kann gegenüber einer anderen Flüssigkristall-Zusammensetzung inert sein und daher als Unterlage oder auch als Deckschicht für eine Flüssigkristallschicht dieser Zusammensetzung geeignet sein. Eine entsprechende Abstimmung von Materialeigenschaften liegt innerhalb der allgemeinen Kenntnisse eines Fachmanns.

Der erfindungsgemäße Lack ist unstrukturiert, d. h. es werden keine Maßnahmen getroffen, um seine Oberfläche gezielt so zu gestalten, dass sie für eine Ausrichtung von Flüssigkristallen geeignet ist. Irgendwelche Maßnahmen, die eine Ausrichtung gezielt fördern könnten, wie Recken, Prägen, Ätzen, etc. werden nicht durchgeführt.

Sicherheitsmerkmale auf Flüssigkristallbasis zeigen auf derartigen Lackschichten trotz des scheinbaren Fehlens einer Ausrichtung die typischen Flüssigkristall-Phänomene, wie lichtpolarisierende Wirkung, betrachtungswinkelabhängige Farbeindrücke, Farbkippeffekte.

Ohne an eine bestimmte Erklärung gebunden zu sein, wird gegenwärtig vermutet, dass auf den inerten Lackschichten zwar keine einheitliche Ausrichtung der Flüssigkristalle im Sinne einer Fernordnung stattfindet, dass aber eine gewisse Nahordnung vorliegt. Es wird davon ausgegangen, dass sich im mikroskopischen Bereich Flüssigkristall-Domänen bilden, innerhalb derer die Flüssigkristalle sich gegenseitig einigermaßen einheitlich ausrichten. Die Mikrodomänen untereinander sind in regelloser Weise unterschiedlich ausgerichtet. An den Domänengrenzen treffen unterschiedlich ausgerichtete Flüssigkristalle zusammen. Da der Brechungsindex der Flüssigkristalle orientierungsabhängig unterschiedlich ist, kommt es an den Domänengrenzen zur Lichtstreuung. Auf diese Weise lässt sich erklären, dass bei Flüssigkristallen auf den inerten, unstrukturierten Lackschichten zwar prinzipiell dieselben Phänomene zu beobachten sind wie bei entsprechenden einheitlich ausgerichteten Flüssigkristallen, jedoch in etwas modifizierter Weise:

Vergleicht man ein Sicherheitsmerkmal mit nematischen Flüssigkristallen auf einer Alignment-Schicht und dasselbe Sicherheitsmerkmal auf einer inerten unstrukturierten Lackschicht, so stellt man bei letzterem eine gewisse Trübung gegenüber ersterem fest, bedingt durch Lichtstreuung an den Domänengrenzen. Diese Trübung stellt zwar eine gewisse Qualitätseinbuße dar, die einem Betrachter jedoch, wenn überhaupt, meist nur dann auffällt, wenn sich das Sicherheitsmerkmal auf einem einheitlichen Untergrund, z. B. einer glatten Metallisierung, befindet. Wenn gleichzeitig andere Merkmale vorhanden sind, die ebenfalls die Aufmerksamkeit des Betrachters erfordern, z. B. Beugungsstrukturen, wie Hologramme, oder farbige Motive, wird die Trübung nicht als störend registriert.

Beim Einsatz cholesterischer Flüssigkristalle stellt man sogar eher eine Qualitätsverbesserung im Vergleich zu perfekt ausgerichteten Schichten fest. Sicherheitselemente mit perfekt ausgerichteten cholesterischen Flüssigkristallen wirken, wenn sie über einen absorbierenden Untergrund gehalten werden, nicht sehr farbintensiv, da sie nur bei Direktreflexion ihre Farbe deutlich zeigen und ansonsten von der Reflexion an der Grenzfläche Luft/Trägermaterial zum Teil überstrahlt werden. Auf einer inerten unstrukturierten Lackschicht hingegen bilden sich Mikrodomänen mit Domänengrenzen.

Durch die Lichtstreuung an den Domänengrenzen wirkt der Farbeffekt unter vielen Betrachtungswinkeln intensiver als bei perfekt ausgerichteten cholesterischen Flüssigkristallen.

Ein einfaches erfindungsgemäßes Sicherheitselement mit einem Sicherheitsmerkmal auf Flüssigkristallbasis kann beispielsweise aus einem Trägermaterial, wie einer Kunststofffolie, einem darauf aufgetragenen unstrukturierten inerten Lack und einer darauf wiederum aufgetragenen Motivschicht aus oder mit Flüssigkristallen, z. B. nematischen Flüssigkristallen, bestehen.

Während bei perfekt ausgerichteten nematischen Flüssigkristallen bei Betrachtung durch einen linearen Polarisationsfilter vor einem Hintergrund mit im Wesentlichen metallischer Reflektion bei geeigneter Stellung des Polarisationsfilters die Flüssigkristalle völlig identisch mit dem Umfeld erscheinen, beobachtet man bei dem obigen Sicherheitselement typischerweise, dass bei Betrachtung durch einen linearen Polarisationsfilter die Flüssigkristalle immer etwas dunkler als das unbeeinflusste Umfeld wirken. Dies kann einerseits von einer gewissen Depolarisation durch die Mikrodomänen herrühren und andererseits dadurch zustande kommen, dass in jeder Stellung des Polarisationsfilters Mikrodomänen vorhanden sind, die das polarisierte Licht so beeinflussen, dass das reflektierte Licht beim erneuten Durchgang durch die Nematenschicht eine andere Polarisationsrichtung aufweist. Der erneute Durchgang kann auch durch anders orientierte Mikrodomänen erfolgen.

Dennoch ist ein ausreichender Hell-Dunkel-Kontrast zum Umfeld bei Drehung des Polarisationsfilters erzielbar, was nur durch das Vorliegen einer gewissen Flüssigkristall-Ausrichtung möglich ist, d. h. durch die Bildung von im Wesentlichen einheitlich ausgerichteten Flüssigkristall-Mikrodomänen.

Anstelle der nematischen Flüssigkristalle können selbstverständlich auch cholesterische Flüssigkristalle verwendet werden. Die cholesterische Phase kann auch aus Nematen in Kombination mit einem Verdriller gebildet werden. Geeignete Materialien sind bekannt.

Die besonderen Vorteile der vorliegenden Erfindung kommen vor allem dann zum Tragen, wenn ein Sicherheitselement nicht nur eine Funktionsschicht auf der Basis von Flüssigkristallen, wie bei der oben beschriebenen einfachsten Ausführungsform, aufweist, sondern wenn die Flüssigkristall-Funktionsschicht mit weiteren Funktionsschichten oder Hilfsschichten, insbesondere mit einer oder mehreren weiteren Flüssigkristall-Funktionsschichten, kombiniert wird. Eine derartige Kombination liegt bei üblichen Sicherheitselementen typischerweise vor. Sicherheitselemente bestehen in der Regel aus einem vielschichtigen Verbund, in dem mehrere Sicherheitsmerkmale in Kombination vorliegen, und in dem folglich auch mehrere Funktionsschichten erforderlich sind, die gegebenenfalls durch Hilfsschichten verbunden und zusammengehalten werden.

Funktionsschichten sind beispielsweise Flüssigkristallschichten, Dünnschichtelemente, Schichten mit magnetischen Partikeln, elektrisch leitfähige Schichten, Schichten mit Diffraktionsstrukturen, Druckfarbenschichten, etc. Hilfsschichten sind Druckannahme-, Schutz- und Primerschichten, Schichten aus Kaschierkleber, Haftvermittler, etc.

Die Schichten können einander auf unterschiedliche Weise beeinflussen, insbesondere können Flüssigkristallschichten von an sie angrenzenden Funktions- und/oder Hilfsschichten in unerwünschter Weise beeinflusst, d. h. in ihren Effekten beeinträchtigt werden. Eine derartige Beeinträchtigung wird verhindert, wenn zwischen den betreffenden Schichten die erfindungsgemäße Lackschicht vorgesehen wird. Nachfolgend werden einige nicht beschränkend zu verstehende Beispiele für Fälle genannt, in denen die erfindungsgemäße Lackschicht vorteilhaft eingesetzt werden kann.

Wird in einem Sicherheitselement eine Flüssigkristallschicht auf eine Schicht aufgetragen oder mit einer Schicht beschichtet, die Bestandteile enthält, wie beispielsweise Lösemittel, die die Flüssigkristallschicht anlösen können, so können diese Bestandteile in der Flüssigkristallschicht zum Verlust der Ausrichtung der Flüssigkristalle und unter Umständen sogar zum Verlust der flüssigkristallinen Phase führen. Derartige Schichten sind insbesondere Druckfarbenschichten, Klebstoffschichten, Schichten mit Metalleffektfarben, Schichten mit Fluoreszenzpigmenten, etc. Werden derartige Schichten nicht unmittelbar mit der Flüssigkristallschicht beschichtet, sondern zuerst mit der erfindungsgemäßen inerten, unstrukturierten Lackschicht beschichtet und darauf erst die Flüssigkristallschicht aufgetragen, so wird eine Beeinflussung der Flüssigkristallschicht zuverlässig vermieden und trotzdem eine gewisse Ausrichtung der Flüssigkristalle erreicht, so dass die Flüssigkristall-Effekte beobachtet werden können.

Auch zwei aneinanderangrenzende Flüssigkristallschichten können sich gegenseitig beeinflussen. In manchen Fällen wird dies bewusst genutzt. Gemäß der Lehre der Druckschrift EP 1 894 736 wird eine farbkippende Motivschicht mit mehreren nebeneinanderliegenden unterschiedlichen Farbkippeffekten hergestellt, indem eine Flüssigkristallschicht (zweite Schicht) auf eine erste Flüssigkristallschicht, die unvollständig vernetzt ist und in Motivform vorliegt, aufgetragen wird. Durch Wechselwirkungen zwischen den Schichten ergeben sich in der zweiten Schicht scharf begrenzte lokale Änderungen der Farbkippeigenschaften. Eine Verschiebung des Farbkippeffekts der gesamten zweiten Schicht durch vollflächige Beschichtung mit Kaschierkleber wird in der Druckschrift EP 1894 736 ebenfalls offenbart. Während in diesem Fall die Beeinflussbarkeit und Veränderbarkeit von Flüssigkristallschichten erwünscht ist und zur Erzielung bestimmter Effekte genutzt wird, ist sie generell meist unerwünscht und kann durch das Vorsehen der erfindungsgemäßen Lackschicht verhindert werden.

Cholesterische Flüssigkristalle können aus nematischen Flüssigkristallen durch Kombination mit einem Verdriller erhalten werden. Grenzt eine flüssigkristalline Schicht, die einen Verdriller enthält, an eine andere flüssigkristalline Schicht an, so kann der Verdriller aus der einen Schicht in die angrenzende Schicht übertreten und die Farbigkeit dieser Schicht beeinflussen. Eine Trennung der beiden Schichten durch die erfindungsgemäße Lackschicht kann hier Abhilfe schaffen.

Mit großem Vorteil kann die erfindungsgemäße Lackschicht auch eingesetzt werden, um zu verhindern, dass Flüssigkristall-Motive, die nur bei Betrachtung durch einen Polarisator sichtbar sein sollen, auch bei Betrachtung ohne Hilfsmittel "erahnt" werden können. Wird ein Motiv aus Flüssigkristallen auf eine Trägerfolie mit Vorzugsrichtung, z. B. eine PET-Folie, aufgetragen, richten sich die nematischen Flüssigkristalle darauf gut aus. Wird die Trägerfolie anschließend vollflächig mit cholesterischen Flüssigkristallen beschichtet, richten sich die cholesterischen Flüssigkristalle auf den nematischen Flüssigkristallen perfekt aus, in den Zwischenräumen jedoch nicht. Das Ergebnis ist, dass die cholesterische Flüssigkristallschicht in den Bereichen, die in Blickrichtung eines Betrachters über Bereichen liegen, in denen sich nematische Flüssigkristalle befinden, praktisch keine Lichtstreuung zeigt, während in den Bereichen, die nicht durch nematische Flüssigkristalle perfekt ausgerichtet werden, aufgrund einer unterschiedlichen Alignmentqualität durch die Trägerfolie eine gewisse Lichtstreuung, insbesondere an den Bereichsgrenzen, zu beobachten ist. Dadurch wird das versteckte Motiv auch ohne Polarisator schemenhaft sichtbar. Wird das Motiv hingegen zuerst mit der erfindungsgemäßen Lackschicht und erst dann mit der cholesterischen Flüssigkristallschicht beschichtet, werden die Unterschiede in der Ausrichtung der cholesterischen Flüssigkristalle auf den nematischen Flüssigkristallen einerseits und der Trägerfolie andererseits weitgehend ausgeglichen. Die cholesterische Flüssigkristallschicht zeigt auf der unstrukturierten Lackschicht zwar deutlich mehr Lichtstreuung als ohne die Lackschicht, aber die Lichtstreuung ist einheitlich, so dass das unter der cholesterischen Flüssigkristallschicht liegende Motiv ohne Polarisator nicht erkannt werden kann.

Die erfindungsgemäße inerte, unstrukturierte Lackschicht bietet sich also an als Zwischenschicht zwischen zwei Flüssigkristallschichten, um eine unerwünschte gegenseitige Beeinflussung der Flüssigkristallschichten zu verhindern; als Untergrund vor der Auftragung einer Flüssigkristallschicht auf eine Sicherheitselementschicht, die die Flüssigkristallschicht in unerwünschter Weise beeinflussen könnte, um Störungen der Flüssigkristallschicht zu verhindern und eine gewisse Ausrichtung in Mikrodomänen zu erzielen. Darüber hinaus kann diese vorteilhaft auch als Deckschicht auf einer Flüssigkristallschicht vor der Auftragung einer weiteren Sicherheitselementschicht eingesetzt werden, um störende Auswirkungen dieser weiteren Schicht auf die Flüssigkristalleffekte zu verhindern. Geeignete Schichtdicken für die erfindungsgemäße Lackschicht liegen in dem Bereich von etwa 0,5 µm bis etwa 10 µm, bevorzugt von etwa 1 µm bis etwa 5 µm, besonders bevorzugt von etwa 2 µm bis etwa 3 µm.

Die erfindungsgemäße unstrukturierte, inerte Lackschicht kann je nach Bedarf vollflächig oder teilflächig aufgetragen werden. Bevorzugte Lacke sind radikalisch oder kationisch härtende UV-Lacke, gegebenenfalls mit geeigneten Fotoinitiatoren. Gleichermaßen gut geeignet sind elektronenstrahlhärtbare Lacke, die keinen Fotoinitiator benötigen. Ein geeigneter UV-Lack enthält beispielsweise 0 Gew.-% bis 99,5 Gew.-% Präpolymere, 0 Gew.-% bis 99,5 Gew.-% Reaktivverdünner und 0,5 Gew.-% bis 15 Gew.-% Fotoinitiator. Als Beispiel für einen geeigneten Lack sei folgende Zusammensetzung genannt: 40 Gew.-% Ebecryl 5129 (Cytec), 15 Gew.-% Ebecryl 81 (Cytec), 35 Gew.-% Trimethylolpropantriacrylat (TMPTA), 7 Gew.-% Ebecryl P115 (Cytec) sowie 3 Gew.-% Irgacure 127 (Ciba).

Vor der Auftragung des Lacks sollte die Schicht, auf die der Lack aufgetragen wird, zumindest tackfrei sein, und auch der Lack selbst sollte, bevor gegebenenfalls weitere Schichten aufgetragen werden, soweit getrocknet bzw. ausgehärtet sein, dass er zumindest tackfrei ist. "Tackfrei" bedeutet, beschichtete Folienstücke von etwa 100 cm², die gestapelt, mit einem Gewicht von 10 kg belastet und 72 Stunden lang bei 40 °C gelagert wurden, lassen sich danach ohne Beschädigung der Beschichtungen mühelos voneinander trennen.

Die Eigenschaften des inerten, unstrukturierten Lacks sind unabhängig vom Auftragsverfahren. Verfahren zur Auftragung des Lacks sind nicht in spezieller Weise eingeschränkt und es können übliche Verfahren zum Einsatz kommen, beispielsweise Druckverfahren, wie Flexodruck, Tiefdruck oder Walzenauftrag. Auch was sonstige Materialien und Verfahren betrifft, kann darauf zurückgegriffen werden, was dem Fachmann auf dem Gebiet der Herstellung von Sicherheitselementen aus seinem Fachwissen bekannt ist.

Geeignete Trägermaterialien sind beispielsweise Filme oder Folien aus Kunststoff, Papier oder textilem Material, aber auch Materialien, wie Blechstreifen oder Glasplättchen. Geeignete Kunststoffe sind z. B. Polyester, wie Polyethylenterephthalat (PET) oder Polyethylennaphthalat (PEN), Polycarbonat (PC), Triacetylcellulose (TAC). Besonders gut zur Geltung kommen die Farbeffekte auf dunklen oder schwarzen Trägern, weshalb dunkel oder schwarz gefärbte oder bedruckte Träger besonders bevorzugt sind.

Die zur Herstellung der Flüssigkristallschichten verwendeten Zusammensetzungen sind bevorzugt polymerisierbare oder härtbare Druckfarben, die aus nematischen oder cholesterischen Flüssigkristallen bestehen, oder Druckfarben oder Lacke, die nematische oder cholesterische Flüssigkristalle enthalten. Besonders bevorzugt sind Farben und Lacke, die strahlungshärtend sind, insbesondere UV-härtend oder ES-härtend. Die Flüssigkristallschichten werden bevorzugt mittels eines Druckverfahrens aufgetragen, beispielsweise durch Flexodruck, Offsetdruck, Tiefdruck, InkJet-Druck, oder mittels Walzensprühen oder Tauchen. Die genannten Materialien oder Verfahren sind nicht beschränkend zu verstehen.

Sicherheitselemente enthalten, wie bereits erwähnt, meist nicht nur ein Sicherheitsmerkmal auf der Basis von Flüssigkristallen, sondern noch weitere Sicherheitsmerkmale. Es ist daher erforderlich, in einem Sicherheitselement entweder mehrere Schichten unmittelbar aufeinander aufzutragen oder mehrere Teilelemente miteinander zu verbinden, beispielsweise mittels Kaschierschichten.

Als einige Beispiele seien genannt ein Beschichten mit Prägelacken mit anschließender Prägung (beispielsweise mit einem Hologramm) und gegebenenfalls Metallisierung; ein Beschichten mit einem Hintergrund, wie Metallisierungen und/oder absorbierenden Schichten, und weiteren Merkmalen, wie beispielsweise Magnetpigmenten oder Fluoreszenzpigmenten; ein Kaschieren auf einen geeigneten Untergrund, der beispielsweise Hologramme, Metallisierungen, Schwarzdruck, magnetische oder fluoreszierende oder thermochrome Stoffe, oder Mikrostrukturanordnungen enthalten kann; eine direkte heißsiegelfähige Ausstattung und Aufbringung auf ein geeignetes Substrat, etc. Ein Sicherheitsmerkmal auf Flüssigkristallbasis mit der erfindungsgemäßen Lackschicht ist weitgehend beliebig mit anderen Sicherheitsmerkmalen kombinierbar. Hinsichtlich weiteren Beispielen für Kombinationsmöglichkeiten von Sicherheitsmerkmalen auf Flüssigkristallbasis mit weiteren Sicherheitsmerkmalen wird insbesondere auf die in der Druckschrift WO 2005/105475 offenbarten Kombinationen verwiesen. Da die erfindungsgemäße Lackschicht auf beliebige Untergründe aufgebracht werden kann, die keine direkte Auftragung von Flüssigkristallen erlauben, eignet sich diese in besonderem Maße dafür, Sicherheitsmerkmale auf Flüssigkristallbasis mit anderen Sicherheitsmerkmalen zu kombinieren.

Erforderlichenfalls kann zur Verbesserung der Haftung zwischen Lackschicht und Flüssigkristallschicht ein Haftvermittler eingesetzt werden. Geeignete Haftvermittler sind Silane (Geniosil von Wacker), Dynasilane (Degussa), Silquest (GE Silicones), Zirkonate und Titanate (Kenrich) und Polyimine (Lupasol-Typen von BASF). Wie die Zusammensetzung der Lackschicht selbst ist auch der Haftvermittler auf die Art der benachbarten Schichten abzustimmen. Geeignet sind Haftvermittler, die die benachbarten Schichten nicht oder nur in vernachlässigbarem Umfang anlösen und nicht oder nur in vernachlässigbarem Umfang in die benachbarten Schichten übergehen. Besonders bevorzugt sind Haftvermittler, die sehr niedrig dosiert werden können.

Das erfindungsgemäße Sicherheitselement wird bevorzugt in Form von Transferbändern mit einer Vielzahl von als Transferelement ausgebildeten Sicherheitselementen bereitgestellt. Transferelemente und Transferelementbänder sind an sich bekannt. Kennzeichnend für Transferbänder ist, dass die Sicherheitselemente auf einer Trägerschicht mit einem Schichtaufbau in umgekehrter Schichtfolge, wie sie später auf dem zu schützenden Gegenstand vorliegen soll, vorbereitet werden. Die Trägerschicht wird nach dem Transfer entweder von dem Schichtaufbau des Sicherheitselements abgezogen oder verbleibt als Schutzschicht auf dem Sicherheitselement. Hinsichtlich Einzelheiten wird auf die Druckschriften EP 0 402 261 B1 und WO 2005/108108 verwiesen.

Das erfindungsgemäße Sicherheitselement kann beliebige Formen und an sich auch beliebige Größen haben. In bevorzugten Ausgestaltungen hat es die Form eines Sicherheitsbandes, eines Sicherheitsstreifens, eines Etiketts, eines Folienpätches oder eines sonstigen flächigen Sicherheitselements. Die Abmessungen werden wesentlich von dem zu schützenden Gegenstand mitbestimmt. Bevorzugt weist das Sicherheitselement eine Dicke von 1 µm bis 100 µm auf, wobei es sich um die für die Ausstattung von Wertdokumenten und Sicherheitspapieren leicht handhabbaren Dicken handelt.

Die Sicherheitselemente gemäß der vorliegenden Erfindung sind insbesondere für die Echtheitssicherung von Wertgegenständen, wie Wertdokumenten, d. h. Banknoten, Urkunden, Schecks, Ausweisdokumenten und ähnlichem, und Sicherheitspapieren gedacht. Unter dem Begriff "Sicherheitspapier" wird eine noch nicht umlauffähige Vorstufe zu einem Wertdokument verstanden, die neben dem Sicherheitselement weitere Echtheitsmerkmale aufweisen kann. Sicherheitspapier liegt üblicherweise in quasi endloser Form vor und wird zu einem späteren Zeitpunkt weiterverarbeitet. Das erfindungsgemäße Sicherheitselement kann dabei in/auf einem Papiersubstrat mit/ohne Synthesefasern vorliegen. Daneben kann das Sicherheitselement auch in/auf Folienverbundbanknoten, insbesondere in/auf jede Schicht der Folienverbundbanknote (Schichtaufbau: Kunststofffolie/Papier/Kunststofffolie, aber auch Papier/Kunststofffolie/Papier), sowie in/auf Polymerbanknoten vorgesehen sein. Neben der Verwendung zur Herstellung von Sicherheitspapieren und Wertdokumenten sind die erfindungsgemäßen Sicherheitselemente aber auch ganz allgemein zur Produktsicherung von Waren jeglicher Art geeignet, beispielsweise zur Kennzeichnung von Datenträgern, Markenartikeln oder Verpackungen.

Die vorliegende Erfindung wird nachfolgend anhand von Figuren noch weiter veranschaulicht. Die Figuren sind nicht maßstabs- und proportionsgetreu. Ferner sind bestimmte, in einer Figur offenbarte Merkmale nicht nur in Kombination mit den übrigen in der entsprechenden Figur offenbarten Merkmalen anwendbar. Vielmehr können im Zusammenhang mit einer speziellen Ausführungsform beschriebene Merkmale jeweils unabhängig mit Merkmalen aus anderen Ausführungsformen kombiniert werden bzw. ganz allgemein in erfindungsgemäßen Sicherheitselementen zur Anwendung kommen.

Es zeigen:
- Fig. 1: einen Querschnitt durch eine Ausführungsform eines erfindungsgemäßen Sicherheitselements,
- Fig. 2A: einen Querschnitt durch ein Sicherheitselement des Standes der Technik,
- Fig. 2B: einen Querschnitt durch eine weitere Ausführungsform eines erfindungsgemäßen Sicherheitselements,
- Fig. 3: eine Aufsicht auf ein Sicherheitselement, wie es in Fig. 2A und Fig. 2B dargestellt ist,
- Fig. 4: einen Querschnitt durch ein Sicherheitselement, wie das in Fig. 2B gezeigte, das mit zusätzlichen Schichten ausgestattet ist,
- Fig. 5: einen Querschnitt durch ein Sicherheitselement, wie das in Fig. 4 gezeigte, das mit einem weiteren Sicherheitsmerkmal ausgestattet ist, und
- Fig. 6: einen Querschnitt durch noch eine weitere Ausführungsform eines erfindungsgemäßen Sicherheitselements.

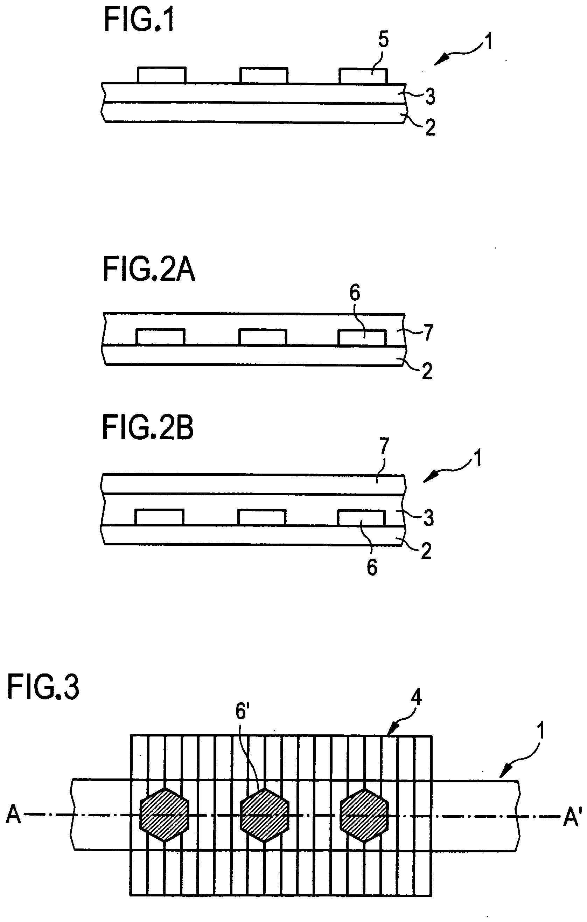

Fig. 1 zeigt ein erfindungsgemäßes Sicherheitselement 1 im Querschnitt. Das Sicherheitselement 1 wird hergestellt durch Aufdrucken eines UV-Lacks als Schicht 3 auf eine Trägerfolie 2 aus beispielsweise PET, gefolgt von Vernetzen des UV-Lacks durch UV-Bestrahlung. Wenn der UV-Lack zumindest soweit vernetzt ist, dass er tackfrei ist, wird eine Flüssigkristallschicht 5 aufgedruckt, wobei in der in Fig. 1 gezeigten Ausführungsform die Flüssigkristallschicht nicht vollflächig ist, sondern in Gestalt eines Motivs vorliegt. Die Flüssigkristallschicht kann beispielsweise nematische oder cholesterische Flüssigkristalle enthalten. Zur besseren Sichtbarkeit der Flüssigkristalleffekte kann die Folie oder der UV-Lack dunkel eingefärbt werden, oder es wird vor dem Aufdrucken des UV-Lacks eine dunkle Farbschicht auf die Folie aufgedruckt oder die Folie mit einer reflektierenden Schicht, z. B. einer Metallisierung, versehen. Generell werden zum Einfärben der unstrukturierten, inerten Lackschicht mit einer gewünschten Farbe bevorzugt in der Lackzusammensetzung lösliche Farbmittel verwendet.

Verwendet man für die Flüssigkristallschicht 5 ein nematisches flüssigkristallines Material und betrachtet diese durch einen linearen Polarisationsfilter, so stellt man bei einer Drehung des Polarisationsfilters einen Hell-Dunkel-Kontrast fest. Dies ist gegenwärtig nur dadurch zu erklären, dass die Flüssigkristalle auf der Lackschicht in einem gewissen Umfang ausgerichtet sind, d. h. sich in regelloser Weise Mikrodomänen gebildet haben, in denen sich die Flüssigkristalle gegenseitig einigermaßen einheitlich ausgerichtet haben.

Fig. 2A zeigt einen Querschnitt durch ein Sicherheitselement des Standes der Technik. Das Sicherheitselement weist eine Trägerfolie 2 auf, die eine Vorzugsrichtung für die Ausrichtung von flüssigkristallinem Material besitzt, beispielsweise eine gereckte PET-Folie. Auf die Trägerfolie 2 ist eine Schicht 6 aus nematischem flüssigkristallinem Material aufgedruckt. Die Schicht 6 hat hier die Form eines Motivs, im Ausführungsbeispiel die eines Wabenmusters. Auf der gereckten PET-Folie findet eine sehr gute Ausrichtung des flüssigkristallinen Materials der Schicht 6 statt. Die Flüssigkristallschicht 6 wird mit einer weiteren Schicht 7 aus flüssigkristallinem Material überdruckt. Das flüssigkristalline Material der Schicht 7 ist cholesterisch und kann beispielsweise aus Nematen in Kombination mit einem Verdriller bestehen. In Aufsicht auf die Schicht aus cholesterischem flüssigkristallinem Material soll die nematische Schicht 6 für einen Betrachter nicht zu erkennen sein. Das Motiv der Schicht 6 soll erst bei Betrachtung durch einen Polarisator 4 erkennbar werden, wie in Fig. 3 gezeigt.

Fig. 3 zeigt eine Aufsicht auf ein Sicherheitselement, wie es in den Figuren 2A und 2B im Querschnitt entlang der Line A-A' dargestellt ist. Das Sicherheitselement wird in Aufsicht auf die cholesterische Flüssigkristallschicht durch einen Linearpolarisator 4 hindurch betrachtet, wobei das Motiv der nematischen Flüssigkristallschicht 6 als Waben 6' sichtbar wird. Die Waben 6' sind je nach Stellung des Polarisators mehr oder weniger deutlich zu erkennen. Eine gewisse Erkennbarkeit der Waben 6' ist jedoch auch ohne Zuhilfenahme des Polarisators 4 gegeben. Ein aufmerksamer Betrachter kann die Waben 6' zumindest unter bestimmten Blickwinkeln schwach erkennen. Der Grund dafür ist, dass sich die cholesterischen Flüssigkristalle der Schicht 7 über den Nematen der Schicht 6 sehr gut ausrichten, während sie sich über der Trägerfolie 2 zumindest in gewissem Umfang schlechter ausrichten. Dementsprechend ist die Lichtstreuung in den Bereichen ohne Nematen stärker als in den Motivbereichen, wodurch das Wabenmotiv unerwünschtermaßen erkennbar werden kann.

Die unerwünschte Erkennbarkeit eines Flüssigkristall-Motivs, d. h. die Erkennbarkeit des Motivs ohne Zuhilfenahme eines Polarisators, kann verhindert werden, indem das Sicherheitselement in erfindungsgemäßer Weise mit einer Lackschicht ausgestattet wird, wie in Fig. 2B gezeigt.

Fig. 2B zeigt ein ähnliches Sicherheitselement wie Fig. 2A. Die Ansicht in Aufsicht durch einen Linearpolarisator 4 ist diesselbe wie bei dem Sicherheitselement von Fig. 2A (Fig. 3). Fig. 2B zeigt ebenfalls einen Schnitt durch das Sicherheitselement entlang der Linie A-A' (Fig. 3). Das erfindungsgemäße Sicherheitselement, wie in Fig. 2B gezeigt, unterscheidet sich von dem Sicherheitselement des Standes der Technik, wie in Fig. 2A gezeigt, durch die unstrukturierte Schicht 3 aus inertem UV-Lack zwischen den Flüssigkristallschichten 6 und 7.

Das erfindungsgemäße Sicherheitselement 1 wird hergestellt, indem zunächst, wie bei dem Sicherheitselement des Standes der Technik, auf einem Träger 2 eine Motivschicht 6 aus nematischen Flüssigkristallen ausgebildet wird. Anschließend wird darauf jedoch vollflächig ein lösemittelfreier UV-Lack 3, der weder das Material der Schicht 6 noch das Material der später darauf aufzubringenden Schicht 7 anlöst, aufgetragen. Der Lack wird durch Bestrahlung mit UV-Licht vollständig oder zumindest bis zur Tackfreiheit ausgehärtet und dann auf der gehärteten Lackschicht eine Schicht 7 aus cholesterischen Flüssigkristallen vollflächig aufgetragen. Falls erforderlich, kann zur Verbesserung der Haftung vor dem Auftragen der Schicht 3 ein Haftvermittler auf die Schicht 6 aufgetragen werden und/oder vor dem Auftragen der Schicht 7 ein Haftvermittler auf die Schicht 3 aufgetragen werden. Der Haftvermittler muss natürlich, wie der UV-Lack, auf das Flüssigkristallmaterial der Schichten 6 und 7 abgestimmt werden, d. h. er darf die optische Wirkung der Flüssigkristallschichten nicht beeinflussen.

Durch die Schicht aus UV-Lack 3 gibt es praktisch keine Unterschiede mehr in der Ausrichtung der cholesterischen Flüssigkristalle der Schicht 7. Die cholesterischen Flüssigkristalle der Schicht 7 sind bei dem Sicherheitselement der Fig. 2B zwar schlechter ausgerichtet als bei dem Sicherheitselement der Fig. 2A, d.h. nur innerhalb von Mikrodomänen einheitlich, weshalb eine erhöhte Lichtstreuung auftritt. Unter bestimmten Betrachtungswinkeln wirkt sich dies allerdings eher günstig auf den Farbeffekt aus. Auf jeden Fall kann das Wabenmotiv der Schicht 6 ohne Hilfe eines Polarisators unter keinem Betrachtungswinkel mehr erahnt werden.

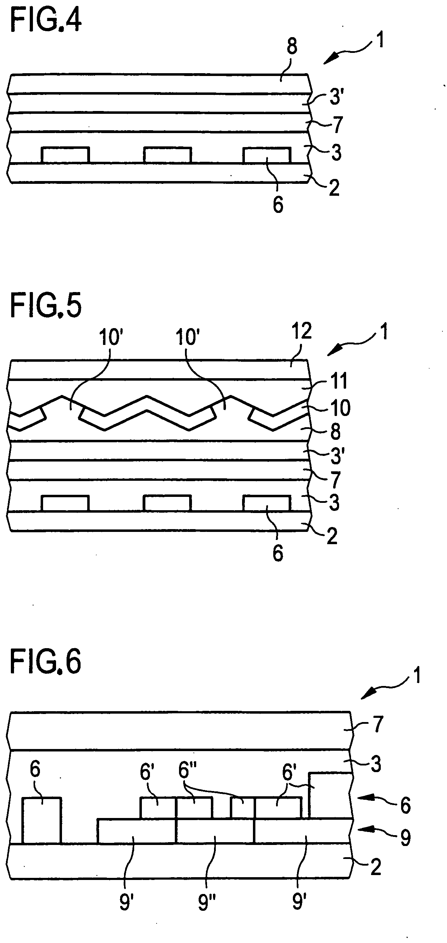

Fig. 4 zeigt ein erfindungsgemäßes Sicherheitselement wie in Fig. 2B, jedoch mit einer zusätzlichen Schicht 8. Wie vorstehend erläutert, weisen Sicherheitselemente typischerweise nicht nur ein einziges Sicherheitsmerkmal, sondern eine Kombination von Sicherheitsmerkmalen auf. Aus diesem Grund haben sie meist einen vielschichtigen Aufbau, und es ist erforderlich, das Sicherheitsmerkmal auf Flüssigkristallbasis mit weiteren Schichten zu verbinden. Dazu wird beispielsweise ein Sicherheitselement-Teilelement, das das Sicherheitsmerkmal auf Flüssigkristallbasis aufweist, mittels eines Klebstoffs mit einem weiteren Sicherheitselement-Teilelement, das ein anderes Sicherheitsmerkmal aufweist, verbunden. Wird ein solcher Klebstoff unmittelbar auf eine Schicht aus flüssigkristallinem Material aufgetragen, besteht die Gefahr, dass die flüssigkristalline Schicht durch den Klebstoff in ihren optischen Eigenschaften verändert wird. Daher wird mit Vorteil, wie in Fig. 4 gezeigt, auf die Schicht 7 aus flüssigkristallinem Material zuerst eine Schicht 3' aus inertem Lack aufgetragen und gehärtet. Diese Schicht 3' dient dann als Untergrund für die Klebstoffschicht.

Eine alternative Variante zur Herstellung vielschichtiger Sicherheitselemente besteht darin, die Sicherheitselemente nicht aus mehreren Teilelementen zusammenzusetzen, sondern auf einem Träger eine Schicht nach der anderen aufzutragen. In der in Fig. 4 gezeigten Ausführungsform könnte beispielsweise die Schicht 7 aus cholesterischem Flüssigkristallmaterial mit einem farbigen Motiv bedruckt werden. Die Schicht 8 in Fig. 4 würde in diesem Fall eine Druckfarbenschicht darstellen. Ähnlich wie Klebstoffe neigen auch Druckfarben dazu, Schichten aus flüssigkristallinem Material anzulösen und ihre optischen Eigenschaften dadurch zu verändern. Es ist daher vorteilhaft, die Schicht 7 aus flüssigkristallinem Material nicht unmittelbar zu bedrucken, sondern zuerst eine Schicht 3' aus inertem Lack vorzusehen und diese dann als Untergrund für das Bedrucken mit einem Druckmotiv zu verwenden.

Fig. 5 veranschaulicht eine unter einer Vielzahl von Möglichkeiten, wie ein erfindungsgemäßes Sicherheitselement, das ein Sicherheitsmerkmal auf Flüssigkristallbasis aufweist, mit weiteren Funktionsschichten ausgestattet werden kann. Bei dem Sicherheitselement, das in Fig. 5 im Querschnitt dargestellt ist, handelt es sich um das in Fig. 2B bzw. 4 dargestellte Sicherheitselement, das zusätzlich eine metallisierte Beugungsstruktur mit Negativschrift aufweist. Das Sicherheitselement wird durch Verkleben von zwei Teilelementen hergestellt. Das erste Teilelement entspricht dem in Fig. 2B dargestellten Sicherheitselement und besteht aus der Trägerfolie 2, der Motivschicht 6 aus nematischen Flüssigkristallen und der Schicht 7 aus cholesterischen Flüssigkristallen, wobei die Schichten 6 und 7 erfindungsgemäß durch eine unstrukturierte Schicht 3 aus inertem Lack getrennt werden.

Das zweite Teilelement wird hergestellt, indem auf eine Trägerfolie (nicht gezeigt) eine Prägelackschicht 11 aufgedruckt und eine gewünschte Prägestruktur in den Prägelack eingeprägt wird, auf die geprägte Schicht 11 eine Metallschicht 10 aufgedampft wird, und durch partielle Demetallisierung der Metallschicht 10 Aussparungen 10', die eine Negativschrift bilden, erzeugt werden. Das Teilelement mit Prägestruktur wird nun mittels einer Klebstoffschicht 8 mit dem Teilelement mit Farbkippeffekten verklebt. Damit der Klebstoff die optischen Eigenschaften der Schicht 7 aus cholesterischem Flüssigkristallmaterial nicht in unerwünschter Weise verändern kann, wird vor dem Verkleben auf die Schicht 7 vorzugsweise eine Schicht 3' aus inertem Lack aufgetragen und durch UV-Strahlung gehärtet.

Danach werden die beiden Teilelemente mittels der Klebstoffschicht 8 miteinander verklebt und die Trägerfolie, auf die der Prägelack aufgetragen wurde, durch Trennwicklung entfernt. Für den Transfer auf ein Zielsubstrat wird dann eine Klebstoffschicht 12 auf den Schichtverbund aufgetragen. Soll das Folienmaterial als Transfermaterial verwendet werden, kann die Trägerfolie 2 nach dem Auftragen des Sicherheitselements auf das Zielsubstrat entfernt werden, so dass der gesamte Schichtverbund dann ohne Trägerfolien vorliegt. Auf diese Weise werden die mit Polarisationseffekten arbeitenden Merkmale in ihrer Wirkung nicht durch Folien beeinträchtigt und können mit hohem Kontrast beobachtet werden.

Anstatt mit einem Zielsubstrat kann das Sicherheitselement 1 auch mit weiteren Funktionsschichten und/oder Hilfsschichten verklebt werden.

Fig. 6 zeigt einen Querschnitt durch eine weitere Ausführungsform eines erfindungsgemäßen Sicherheitselements 1. Das Sicherheitselement weist eine Trägerfolie 2, eine gereckte PET-Folie, eine Schicht 6 aus nematischem Flüssigkristallmaterial und eine Schicht 7 aus cholesterischem Flüssigkristallmaterial auf. Die Schichten 6 und 7 werden durch eine unstrukturierte Schicht 3 aus inertem Lack voneinander getrennt. Im Unterschied zu den Sicherheitselementen, die in den vorhergehenden Figuren dargestellt wurden, ist die Schicht 6 aus nematischem Flüssigkristallmaterial nur zum Teil unmittelbar auf der PET-Folie ausgebildet. Andere Teilbereiche der Schicht 6 befinden sich auf einer Alignment-Schicht 9, die Bereiche 9' mit einer ersten Orientierung und Bereiche 9" mit einer zweiten Orientierung aufweist. In der Schicht 6 aus nematischem Flüssigkristallmaterial ergeben sich dadurch Bereiche mit drei verschiedenen Orientierungen: Bereiche 6 mit der Orientierung der PET-Folie, Bereiche 6' mit der Orientierung der Alignment-Schicht 9', und Bereiche 6" mit der Orientierung der Alignment-Schicht 9". Wird darauf unmittelbar die Schicht 7 aus cholesterischem Flüssigkristallmaterial aufgetragen, ergeben sich in der Schicht 7, bedingt durch die unterschiedlichen Ausrichtungen des Untergrunds, im Extremfall sechs Bereiche mit unterschiedlicher Ausrichtung: Bereiche über der PET-Folie, die durch die PET-Folie mehr oder weniger gut ausgerichtet werden; Bereiche über den nematischen Teilbereichen 6, die durch die Nematen in diesen Teilbereichen ausgerichtet werden; Bereiche über den nematischen Teilbereichen 6' mit der Orientierung dieser Teilbereiche; Bereiche über den Alignmentschicht-Teilbereichen 9' mit entsprechender Ausrichtung; Bereiche über den nematischen Teilbereichen 6", die durch die Nematen in diesen Teilbereichen ausgerichtet werden; und Bereiche über den Alignmentschicht-Teilbereichen 9", deren Ausrichtung durch die Ausrichtung der Teilbereiche 9" bestimmt wird. Die Ausrichtung der Teilbereiche 6' und 9', sowie der Teilbereiche 6" und 9" ist zwar prinzipiell identisch, aber die entsprechende Ausrichtung wird unterschiedlich gut von der cholesterischen Phase übernommen. Daher sieht ein Betrachter bei Aufsicht auf die cholesterische Phase ohne Polarisator ein relativ uneinheitliches Bild. Durch das Vorsehen der erfindungsgemäßen unstrukturierten Lackschicht 3 findet eine Vereinheitlichung der Orientierungen statt. Die Schicht 7 erscheint bei Betrachtung ohne einen Polarisator völlig einheitlich, und bei Betrachtung durch einen Polarisator hindurch kann das Motiv der nematischen Flüssigkristallschicht beobachtet werden.

## Patentansprüche

1. Sicherheitselement (1) zur Echtheitssicherung eines Wertgegenstands, wie eines Sicherheitspapiers, eines Wertdokuments oder eines Markenartikels, aufweisend
einen Schichtaufbau mit
- mindestens einer Schicht (5;7) auf der Basis eines flüssigkristallinen Materials und
- mindestens einer Lackschicht (3), auf die die Flüssigkristallschicht (5;7) aufgetragen ist,
**dadurch gekennzeichnet, dass** die Lackschicht (3) unstrukturiert ist und aus einem Lack besteht, der frei von Flüssigkristallen ist und gegenüber der Flüssigkristallschicht inert ist.

2. Sicherheitselement nach Anspruch 1, **dadurch gekennzeichnet, dass** der Lack lösungsmittelfrei ist.

3. Sicherheitselement nach Anspruch 1 oder 2, **dadurch gekennzeichnet, dass** die Lackschicht eine Schichtdicke zwischen etwa 0,5 µm und etwa 10 µm, bevorzugt zwischen etwa 1 µm und etwa 5 µm, besonders bevorzugt zwischen etwa 2 µm und etwa 3 µm aufweist.

4. Sicherheitselement nach wenigstens einem der Ansprüche 1 bis 3, **dadurch gekennzeichnet, dass** der Lack UV-härtend oder elektronenstrahlhärtend, bevorzugt radikalisch oder kationisch härtend, ist.

5. Sicherheitselement nach einem der Ansprüche 1 bis 4, **dadurch gekennzeichnet, dass** es mindestens eine weitere Schicht aufweist, auf die die Lackschicht aufgetragen ist.

6. Sicherheitselement nach Anspruch 5, **dadurch gekennzeichnet, dass** die mindestens eine weitere Schicht gegenüber der Flüssigkristallschicht nicht inert ist.

7. Sicherheitselement nach Anspruch 5 oder 6, **dadurch gekennzeichnet, dass** die mindestens eine weitere Schicht eine Funktionsschicht ist.

8. Sicherheitselement nach Anspruch 7, **dadurch gekennzeichnet, dass** die Funktionsschicht eine weitere Flüssigkristallschicht ist.

9. Sicherheitselement nach wenigstens einem der Ansprüche 1 bis 8, **dadurch gekennzeichnet, dass** es zwischen der Flüssigkristallschicht und der Lackschicht einen Haftvermittler aufweist.

10. Sicherheitselement nach einem der Ansprüche 1 bis 9, **dadurch gekennzeichnet, dass** es einen vielschichtigen Schichtaufbau mit mindestens einer gegebenenfalls weiteren Funktionsschicht aufweist.

11. Sicherheitselement nach Anspruch 10, **dadurch gekennzeichnet, dass** die mindestens eine weitere Funktionsschicht ausgewählt ist aus der Gruppe, die besteht aus einer reflektierenden Schicht, einer beugungsoptisch wirksamen Schicht, einer Interferenzschicht, einer Schicht, die maschinenlesbare Merkmalsstoffe, insbesondere reflektierende, magnetische, elektrisch leitfähige, lumineszierende Stoffe enthält, einer Druckfarbenschicht.

12. Sicherheitselement nach Anspruch 10 oder 11, **dadurch gekennzeichnet, dass** es eine Hilfsschicht, insbesondere eine Klebstoffschicht, aufweist.

13. Sicherheitselement nach wenigstens einem der Ansprüche 10 bis 12, **dadurch gekennzeichnet, dass** es zwischen der Flüssigkristallschicht und der mindestens einen weiteren Funktionsschicht und/ oder gegebenenfalls der Hilfsschicht eine Lackschicht, die aus einem Lack besteht, der gegenüber der Flüssigkristallschicht inert ist, aufweist.

14. Verfahren zur Herstellung eines Sicherheitselements (1) zur Echtheitssicherung eines Wertgegenstands, wie eines Sicherheitspapiers, eines Wertdokuments oder eines Markenartikels, das einen Schichtaufbau aufweist, folgende Schritte aufweisend:
- Ausbilden einer Lackschicht (3) auf einer Schicht des Schichtaufbaus und
- Auftragen einer Flüssigkristallschicht (5;7) auf die Lackschicht(3),
**dadurch gekennzeichnet, dass** die Lackschicht (3) unstrukturiert ausgebildet wird und zur Ausbildung der Lackschicht (3) ein Lack verwendet wird, der frei von Flüssigkristallen ist und gegenüber der Flüssigkristallschicht inert ist, wobei die Lackschicht (3) derart ausgebildet wird, dass sie vor dem Auftragen der Flüssigkristallschicht (5;7) zumindest tackfrei ist.

15. Verfahren nach Anspruch 14, **dadurch gekennzeichnet, dass** die Schicht des Schichtaufbaus, auf der die Lackschicht ausgebildet wird, eine Funktionsschicht ist.

16. Verfahren nach Anspruch 15, **dadurch gekennzeichnet, dass** die Funktionsschicht eine weitere Flüssigkristallschicht ist.

17. Verfahren nach wenigstens einem der Ansprüche 14 bis 16, **dadurch gekennzeichnet, dass** auf die Flüssigkristallschicht vor dem Zusammenbringen mit mindestens einer gegebenenfalls weiteren Funktionsschicht und/ oder einer Hilfsschicht eine Lackschicht, die aus einem Lack besteht, der gegenüber der Flüssigkristallschicht inert ist, aufgetragen wird.

18. Transferband aufweisend eine Vielzahl von auf ein Substrat, wie ein Sicherheitspapier, ein Wertdokument oder einen anderen Wertgegenstand zu transferierenden Sicherheitselementen nach einem der Ansprüche 1 bis 13.

19. Wertgegenstand, wie ein Sicherheitspapier für die Herstellung von Sicherheits- oder Wertdokumenten, oder Wertdokument, **dadurch gekennzeichnet, dass** er mit einem Sicherheitselement nach einem der Ansprüche 1 bis 13 oder einem Transferelement aus einem Transferband nach Anspruch 18 ausgestattet ist.

20. Verwendung eines Sicherheitselements nach einem der Ansprüche 1 bis 13 oder eines Transferelements nach Anspruch 18 oder eines nach einem der Ansprüche 14 oder 17 hergestellten Sicherheitselements zur Produktsicherung von Waren jeglicher Art.

## Claims

1. A security element (1) for securing the authenticity of a value object, such as a security paper, a value document or a branded article, having
a layer structure with
- at least one layer (5; 7) on the basis of a liquid crystalline material and
- at least one lacquer layer (3) to which the liquid crystal layer (5; 7) is applied,
**characterized in that** the lacquer layer (3) is unstructured and consists of a lacquer which is free of liquid crystals and is inert with respect to the liquid crystal layer.

2. The security element according to claim 1, **characterized in that** the lacquer is free of solvent.

3. The security element according to claim 1 or 2, **characterized in that** the lacquer layer has a layer thickness of between about 0.5 µm and about 10 µm, preferably between about 1 µm and about 5 µm, particularly preferably between about 2 µm and about 3 µm.

4. The security element according to at least one of claims 1 to 3, **characterized in that** the lacquer is UV-curing or electron-beam curing, preferably radically or cationically curing.

5. The security element according to any of the claims 1 to 4, **characterized in that** it has at least one further layer to which the lacquer layer is applied.

6. The security element according to claim 5, **characterized in that** the at least one further layer is not inert with respect to the liquid crystal layer.

7. The security element according to claim 5 or 6, **characterized in that** the at least one further layer is a functional layer.

8. The security element according to claim 7, **characterized in that** the functional layer is a further liquid crystal layer.

9. The security element according to at least one of claims 1 to 8, **characterized in that** it has an adhesion promoter between the liquid crystal layer and the lacquer layer.

10. The security element according to any of the claims 1 to 9, **characterized in that** it has a multilayer layer structure with at least one further, optionally functional, layer.

11. The security element according to claim 10, **characterized in that** the at least one further functional layer is chosen from the group consisting of a reflective layer, a diffraction-optically effective layer, an interference layer, a layer containing machine-readable feature substances, in particular reflecting, magnetic, electroconductive, luminescent substances, a printing ink layer.

12. The security element according to claim 10 or 11, **characterized in that** it has an auxiliary layer, in particular an adhesive layer.

13. The security element according to at least one of claims 10 to 12, **characterized in that,** between the liquid crystal layer and the at least one further functional layer and/or optionally the auxiliary layer, it has a lacquer layer consisting of a lacquer that is inert with respect to the liquid crystal layer.

14. A method for manufacturing a security element (1) for securing the authenticity of a value object, such as a security paper, a value document or a branded article, which has a layer structure, having the following steps of:
- forming a lacquer layer (3) on a layer of the layer structure and
- applying a liquid crystal layer (5; 7) to the lacquer layer (3),
**characterized in that** the lacquer layer (3) is formed so as to be unstructured and, for forming the lacquer layer (3), a lacquer is used which is free of liquid crystals and is inert with respect to the liquid crystal layer, wherein the lacquer layer (3) is formed such that it is at least tack-free before the application of the liquid crystal layer (5; 7).

15. The method according to claim 14, **characterized in that** the layer of the layer structure on which the lacquer layer is formed is a functional layer.

16. The method according to claim 15, **characterized in that** the functional layer is a further liquid crystal layer.

17. The method according to at least one of claims 14 to 16, **characterized in that** a lacquer layer consisting of a lacquer which is inert with respect to the liquid crystal layer is applied to the liquid crystal layer prior to contacting said liquid crystal layer with at least one further, optionally functional, layer and/or an auxiliary layer.

18. A transfer band having a multiplicity of security elements according to any of the claims 1 to 13 to be transferred to a substrate, such as a security paper, a value document or other value object.

19. A value object, such as a security paper for manufacturing security or value documents, or a value document, **characterized in that** it is equipped with a security element according to any of the claims 1 to 13 or a transfer element from a transfer band according to claim 18.

20. Use of a security element according to any of the claims 1 to 13 or of a transfer element according to claim 18 or a security element manufactured in accordance with any of the claims 14 or 17 for product securing of goods of any kind.

## Revendications

1. Élément de sécurité (1) destiné à garantir l'authenticité d'un objet de valeur tel que d'un papier de sécurité, d'un document de valeur ou d'un article de marque, comportant
une structure à couches ayant
- au moins une couche (5; 7) sur la base d'un matériau cristallin liquide, et
- au moins une couche de vernis (3) sur laquelle la couche cristalline liquide (5; 7) est appliquée,
**caractérisé en ce que** la couche de vernis (3) est non structurée et consiste en un vernis exempt de cristaux liquides et inerte vis-à-vis de la couche cristalline liquide.

2. Élément de sécurité selon la revendication 1, **caractérisé en ce que** le vernis est exempt de solvants.

3. Élément de sécurité selon la revendication 1 ou 2, **caractérisé en ce que** la couche de vernis a une épaisseur de couche située entre environ 0,5 µm et environ 10 µm, de préférence entre environ 1 µm et environ 5 µm, particulièrement de préférence entre environ 2 µm et environ 3 µm.

4. Élément de sécurité selon au moins une des revendications de 1 à 3, **caractérisé en ce que** le vernis est durcissant par UV ou durcissant par faisceau d'électrons, de préférence durcissant par voie radicalaire ou durcissant par voie cationique.

5. Élément de sécurité selon une des revendications de 1 à 4, **caractérisé en ce qu'**il comporte au moins une couche supplémentaire sur laquelle la couche de vernis est appliquée.

6. Élément de sécurité selon la revendication 5, **caractérisé en ce que** la au moins une couche supplémentaire n'est pas inerte vis-à-vis de la couche cristalline liquide.

7. Élément de sécurité selon la revendication 5 ou 6, **caractérisé en ce que** la au moins une couche supplémentaire est une couche fonctionnelle.

8. Élément de sécurité selon la revendication 7, **caractérisé en ce que** la couche fonctionnelle est une couche cristalline liquide supplémentaire.

9. Élément de sécurité selon au moins une des revendications de 1 à 8, **caractérisé en ce que**, entre la couche cristalline liquide et la couche de vernis, il comporte un agent adhésif.

10. Élément de sécurité selon une des revendications de 1 à 9, **caractérisé en ce qu'**il comporte une structure à couches multicouche ayant au moins une couche fonctionnelle, éventuellement supplémentaire.

11. Élément de sécurité selon la revendication 10, **caractérisé en ce que** la au moins une couche fonctionnelle supplémentaire est sélectionnée parmi le groupe qui consiste en une couche réfléchissante, en une couche à effet de diffraction optique, en une couche interférentielle, en une couche qui contient des substances caractéristiques lisibles par machine, en particulier des substances réfléchissantes, magnétiques, électriquement conductrices, luminescentes, en une couche d'encre d'impression.

12. Élément de sécurité selon la revendication 10 ou 11, **caractérisé en ce qu'**il comporte une couche auxiliaire, en particulier une couche de colle.

13. Élément de sécurité selon au moins une des revendications de 10 à 12, **caractérisé en ce que**, entre la couche cristalline liquide et la au moins une couche fonctionnelle supplémentaire et/ou éventuellement la couche auxiliaire, il comporte une couche de vernis qui consiste en un vernis inerte vis-à-vis de la couche cristalline liquide.

14. Procédé de fabrication d'un élément de sécurité (1) qui est destiné à garantir l'authenticité d'un objet de valeur tel que d'un papier de sécurité, d'un document de valeur ou d'un article de marque, et qui comporte une structure à couches, comportant les étapes suivantes :
- génération d'au moins une couche de vernis (3) sur une couche de la structure à couches,
- application d'une couche cristalline liquide (5; 7) sur la couche de vernis (3),
**caractérisé en ce que** la couche de vernis (3) est générée sous forme non structurée et que, pour la génération de la couche de vernis (3), c'est un vernis exempt de cristaux liquides et inerte vis-à-vis de la couche cristalline liquide qui est utilisé, cependant que la couche de vernis (3) est générée de telle façon que, avant l'application de la couche cristalline liquide (5; 7), elle est au moins exempte d'adhérence.

15. Procédé selon la revendication 14, **caractérisé en ce que** la couche de la structure à couches sur laquelle la couche de vernis est générée est une couche fonctionnelle.

16. Procédé selon la revendication 15, **caractérisé en ce que** la couche fonctionnelle est une couche cristalline liquide supplémentaire.

17. Procédé selon une des revendications de 14 à 16, **caractérisé en ce que,** sur la couche cristalline liquide, avant la jonction à au moins une couche fonctionnelle éventuellement supplémentaire et/ou à une couche auxiliaire, une couche de vernis consistant en un vernis inerte vis-à-vis de la couche cristalline liquide.est appliqué.

18. Ruban de transfert comportant une pluralité d'éléments de sécurité selon une des revendications de 1 à 13 à transférer sur un substrat tel qu'un papier de sécurité, un document de valeur ou un objet de valeur.

19. Objet de valeur tel qu'un papier de sécurité destiné à la fabrication de documents de sécurité ou de valeur, ou document de valeur, **caractérisé en ce qu'**il est doté d'un élément de sécurité selon une des revendications de 1 à 13 ou d'un élément de transfert issu d'un ruban de transfert selon la revendication 18.

20. Utilisation d'un élément de sécurité selon une des revendications de 1 à 13 ou d'un élément de transfert selon la revendication 18 ou d'un élément de sécurité fabriqué selon une des revendications de 14 ou 17, pour la protection de produits consistant en des marchandises de tous genres.
